(19) **Europäisches Patentamt**
**European Patent Office**
**Office européen des brevets**

(11) **EP 4 305 320 B1**

(12) **EUROPÄISCHE PATENTSCHRIFT**

(45) Veröffentlichungstag und Bekanntmachung des Hinweises auf die Patenterteilung:
**25.12.2024 Patentblatt 2024/52**

(21) Anmeldenummer: **22712370.0**

(22) Anmeldetag: **09.03.2022**

(51) Internationale Patentklassifikation (IPC):
**F16B 35/06** (2006.01)   **F16B 41/00** (2006.01)
**F16B 5/02** (2006.01)

(52) Gemeinsame Patentklassifikation (CPC):
**F16B 41/002; F16B 5/0241; F16B 35/06**

(86) Internationale Anmeldenummer:
**PCT/EP2022/056073**

(87) Internationale Veröffentlichungsnummer:
**WO 2022/189526 (15.09.2022 Gazette 2022/37)**

(54) **FEDERKOPFSCHRAUBENANORDNUNG**

SPRING HEAD SCREW ASSEMBLY

ENSEMBLE VIS À TÊTE DE RESSORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2021 DE 102021105698**

(43) Veröffentlichungstag der Anmeldung:
**17.01.2024 Patentblatt 2024/03**

(73) Patentinhaber: **EJOT SE & Co. KG**
**57319 Bad Berleburg (DE)**

(72) Erfinder:
• **HELLMIG, Ralph Joerg**
**57334 Bad Laasphe (DE)**

• **KORN, David**
**57334 Bad Laasphe (DE)**

(74) Vertreter: **Puschmann Borchert Kaiser Klettner Patentanwälte Partnerschaft mbB**
**Bajuwarenring 21**
**82041 Oberhaching (DE)**

(56) Entgegenhaltungen:
**EP-A1- 0 570 290     DE-A1- 102016 100 446**
**DE-A1- 3 135 692     DE-B1- 2 611 395**
**US-A- 5 209 596     US-A1- 2005 281 611**

EP 4 305 320 B1

**Beschreibung**

Die Erfindung betrifft eine Federkopfschraubenanordnung gemäß dem Oberbegriff des Anspruchs 1.

Aus dem Stand der Technik, beispielsweise aus der DE 10 2016 100 446 A1, sind Federkopfschrauben bekannt, die ausgehend vom Kopf eine konische Schürze in der Art einer Tellerfeder aufweisen, wobei sich die Schürze in Richtung des freien Endes der Federkopfschraube aufweitet. Die Innenfläche der konischen Schürze geht mit einem Radius in einen gewindetragenden Schaft über. Die Schürze weist an ihrem dem freien Schraubenende zugewandten Ende einen Anlagebereich auf, der insbesondere eine Auflageebene bildet, die insbesondere orthogonal zur Schraubenachse liegt. Die Innenfläche der konischen Schürze schließt mit der Auflageebene einen Aufstandswinkel α ein.

Solche Schrauben werden verwendet, um Klemmteile an Unterkonstruktionen zu befestigen, die über die Zeit einer Verminderung ihrer Bauteildicke unterliegen, wobei durch den Federkopf die Vorspannung aufrechterhalten wird.

Insbesondere unter verändertem Temperatureinfluss kommt es bei manchen Werkstoffen zu einer signifikanten Kriechverformung unter der jeweils anliegenden Vorspannkraft.

Nach dem Stand der Technik haben die bekannten Ausführungen den Nachteil, dass ungünstige Schraubfälle eintreten können, bei welchen sich eine Unterlegscheibe mit der Schraube verhakt, wodurch bei längerer Temperatureinwirkung von beispielsweise Temperaturen über 80°C bis etwa 160°C im eingeschraubten Zustand die Vorspannkraft über die Zeit so weit abnimmt, dass sie unter einem zulässigen Mindestwert liegt.

Der Erfindung liegt unter anderem die Erkenntnis zu Grunde, dass die Kriechverformung besonders im Bereich einer hohen Flächenpressung des Klemmteils vorliegt.

Es ist Aufgabe der Erfindung, eine Federkopfschraubenanordnung mit einem verbesserten Vorspannkrafterhalt unter dem Einfluss höherer Temperaturen und eine Erhöhung der Montagesicherheit zu erreichen.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterentwicklungen der Erfindung.

In bekannter Weise umfasst eine Federkopfschraubenanordnung eine Federkopfschraube, die ausgehend vom Kopf eine konische Schürze in der Art einer Tellerfeder aufweist, wobei sich die Schürze in Richtung des freien Endes der Federkopfschraube aufweitet. Die Innenfläche der konischen Schürze geht mit einem Radius in einen gewindetragenden Schaft über. Die Schürze weist an ihrem dem freien Schraubenende zugewandten Ende einen Anlagebereich auf, der insbesondere eine Auflageebene bildet, die insbesondere orthogonal zur Schraubenachse liegt. Die Innenfläche der konischen Schürze schließt mit der Auflageebene einen Aufstandswinkel α ein.

Erfindungsgemäß liegt zwischen dem gewindetragenden Teil des Schafts und der Schürze der Federkopfschraube eine Unterlegscheibe, die von dem Schaft durchsetzt ist, so dass die Unterlegscheibe im verbauten Zustand zwischen dem gehaltenen Bauteil und der Schürze liegt.

Die Unterlegscheibe reduziert die von der Schürze ausgeübte Flächenpressung auf das Bauteil, wodurch der absolute Betrag der Kriechverformung des Klemmteils bei gleicher Vorspannkraft reduziert werden kann.

Die Unterlegscheibe ist, bevorzugt unverlierbar, in einem gewindefreien Teil des Schafts gehalten, wobei der gewindefreie Teil des Schafts zwischen dem Kopf und einem gewindetragenden Teil des Schafts liegt und einen Bolzendurchmesser aufweist. Der Innendurchmesser der Unterlegscheibe liegt bevorzugt zwischen dem Außendurchmesser des Schraubengewindes und dem Bolzendurchmesser.

Die erfindungsgemäße Schraube ist derart ausgebildet, dass der Schaft zwischen der Auflageebene und dem Radius im Schaftübergang zur Schürze einen zylindrischen Bereich aufweist, der in seinem Durchmesser dem Bolzendurchmesser entspricht.

Die dem Kopf zugewandte Fläche der Unterlegscheibe liegt in der Auflageebene, wenn die Unterlegscheibe die Schürze gerade berührt.

Durch das Vorliegen des zylindrischen Bereichs zwischen der Auflageebene und dem Schaftübergang kann die Wahrscheinlichkeit reduziert werden, dass beim Eindrehen der Federkopfschraube der einen Radius aufweisende Schaftübergang zwischen Schaft und Schürze an der Unterlegscheibe in Anlage kommt, obwohl die gewünschte Vorspannung der Schürze noch nicht erreicht ist, was dann zu einem prozessbegrenzenden Anstieg des Einschraubmoments führen kann.

Erfindungsgemäß kann so durch den zylindrischen Bereich zwischen der Auflageebene und dem Schaftübergang die Schraube über einen größeren Einschraubwinkel angezogen werden, ohne dass der Schaftübergang an der Unterlegscheibe anliegt. So kann der elastische Federweg der Schürze zuverlässiger ausgenutzt werden.

So kann beispielsweise ein im Vergleich zum Schaftdurchmesser nur sehr geringfügig größerer Innendurchmesser der Unterlegscheibe, wie er für eine aufgewalzte, unverlierbare Unterlegscheibe notwendig ist, ermöglicht werden, ohne dass sich dies negativ auf den Einschraubwinkel auswirkt. Auch für den Fall, bei dem die Unterlegscheibe einen gegenüber dem Schaftdurchmesser großzügig tolerierten Innendurchmesser aufweist, wird die Wahrscheinlichkeit, dass es bei einer exzentrischen Lage der Unterlegscheibe zu einer Blockade zwischen Schaftübergang und Unterlegscheibe kommt, erheblich reduziert.

Durch die erfindungsgemäße Maßnahme kann dann der Federbereich des Kopfes der Federkopfschraube erhöht werden, was dann zu einem verbesserten Vorspannkrafterhalt unter dem Einfluss höherer Temperaturen führt.

Bevorzugt kann der Übergang vom Radius zum Schaft und zur Schürze tangential verlaufen. Dies hat den Vorteil, dass eine homogene Spannungsverteilung in der Schürze sowie eine verminderte Kerbwirkung für eine höhere dynamische Sicherheit erreicht werden.

Die Schürze bildet in der Auflageebene eine Ringfläche mit einem Auflageinnendurchmesser $D_{KA}$. Der gewindefreie Teil des Schafts besitzt den Bolzendurchmesser da.

Gemäß einer weiteren bevorzugten Ausgestaltung der Erfindung kann der Radius im Übergang vom Schaft zur Innenfläche der Schürze kleiner sein als tan (a) * Faktor * $(D_{KA}-d_0)/2$, wobei der Faktor kleiner als 0,5 ist und bevorzugt zwischen 0,2 und 0,4 liegt.

Der Radius im Schaftübergang genügt also der Formel:

$$R_U < \tan(\alpha) * \text{Faktor} * (D_{KA}-d_0)/2 \ | \ \text{Faktor} < 0,5$$

Bevorzugt beträgt der Innendurchmesser der Unterlegscheibe weniger als das 1,07-fache des Schaftdurchmessers im gewindefreien Teil zwischen dem Kopf und dem gewindetragenden Teil des Schafts.

Gemäß einer weiteren bevorzugten Ausgestaltung liegt der Aufstandswinkel $\alpha$ zwischen 20° und 40°, insbesondere zwischen 28° und 32°. Dadurch ergibt sich der Vorteil, dass bei der angestrebten Vorspannkraft ein ausreichendes Drehwinkelfenster zur Montage zur Verfügung steht.

Gemäß einer weiteren vorteilhaften Ausgestaltung beträgt die Stärke der Schürze etwa 5% bis 15% des Auflageinnendurchmessers. Über die Stärke der Schürze kann der Bereich der erzeugbaren Vorspannkraft eingestellt werden.

Gemäß einem weiteren Aspekt der Erfindung wird ein Verfahren zur automatischen Verschraubung einer erfindungsgemäßen Federkopfschraube angegeben. Gemäß dem Verfahren wird die Federkopfschraube so lange angezogen, bis ein vordefiniertes Drehmoment erreicht ist, und ab der Detektion des Drehmoments wird die Federkopfschraube über einen vordefinierten Drehwinkel weiter eingeschraubt.

Der vordefinierte Winkel liegt bei wenigstens 180° und das vordefinierte Drehmoment liegt bevorzugt oberhalb eines für die Anwendung definierten Einschraubmoments und unterhalb eines Drehmoments, das aufgewendet werden muss, um die Schürze plastisch zu verformen.

Der Bereich der plastischen Verformung kann für jeden Anwendungsfall gut ermittelt werden, da in dem Bereich der beginnenden plastischen Verformung der Drehmomentanstieg merklich abflacht und sich ein Plateau in der Einschraubwinkel-Drehmomentkurve ergibt, bis die Schürze vollständig plastisch verformt ist und das Drehmoment bei zunehmendem Einschraubwinkel wieder steil ansteigt.

Das vordefinierte Drehmoment liegt bevorzugt in der Mitte zwischen dem zur plastischen Verformung notwendigen Drehmoment und dem für die Anwendung definierten Einschraubmoment.

Gemäß dem Verfahren zur Verschraubung einer vorbeschriebenen Federkopfschraube wird ein zu befestigendes Klemmteil, das aus einem Werkstoff besteht, der unter entsprechendem Temperatureinfluss unter der jeweils anliegenden Vorspannkraft einer signifikanten Kriechverformung unterliegt, durch die Federkopfschraube mit einer Unterkonstruktion, in die die Federkopfschraube eingeschraubt wird, verspannt.

Gemäß einem weiteren Aspekt der Erfindung betrifft diese eine solche Bauteilverbindung umfassend eine vorbeschriebene Federkopfschraubenanordnung umfassend eine Federkopfschraube und eine Unterlegscheibe, eine Unterkonstruktion, in die die Federkopfschraube eingeschraubt ist, wobei zwischen der Unterlegscheibe und der Unterkonstruktion ein Klemmteil liegt, das zwischen der Unterlegscheibe und der unteren Bauteillage unter Vorspannung gehalten wird.

Dadurch, dass die Schürze mit ihrem Randbereich auf der Unterlegscheibe aufliegt, wird der lokale Spannungseintrag durch die Schürze auf das Klemmteil deutlich reduziert, wodurch das Kriechen des Klemmteilwerkstoffs und damit die Kriechverformung des Klemmteils signifikant reduziert werden.

Dennoch kommt es bei Verwendung der Bauteilverbindung in einem für den Einsatzzweck der Bauteilverbindung zulässigen Temperaturbereich durch die Kriechverformung zu einer Reduzierung der Stärke des Klemmteils um eine maximale Kriechstrecke unter der von dem Federkopf aufgebrachten Vorspannung.

Entsprechend ist die Federkopfschraubenanordnung, insbesondere die Federkopfschraube, derart dimensioniert, dass der in der elastischen Verformung des Federkopfs gespeicherte Federweg und die in der Längung des Schafts gespeicherte Längung der Schraube einen Gesamtweg bilden, der größer ist als die maximale Kriechstrecke im zulässigen Temperaturbereich.

So verbleibt ein gespeicherter Federweg, durch den auch unter Kriechen des Klemmteils zuverlässig eine Vorspannung auf dasselbe aufgebracht werden kann. Somit übersteigt der Gesamtweg die Längung eines konventionellen Schraubenschaftes bei gleicher Vorspannung und Schraubendurchmesser.

Bevorzugt entspricht die Differenz aus dem Gesamtweg und der maximalen Kriechstrecke über eine bestimmte Zeit einem Federweg, bei dem eine Mindestvorspannung auf das Bauteil ausgeübt wird. Dies wird über die Dimensionierung der Unterlegscheibe und der Schürze erreicht.

Die Mindestvorspannung ist anwendungsbezogen und in Bezug auf die Bauteilverbindung vordefiniert.

Die Federkopfschraube und die Unterlegscheibe sind beispielsweise aus einem Stahl gefertigt, wobei das Klemmteil bevorzugt ein Kupferteil ist.

Beispielsweise wird die Federkopfschraubenanordnung dazu verwendet, ein einen lösbaren elektrischen Kontakt herstellendes Klemmteil mit einem zweiten Bauteil des elektrischen Kontakts zu verbinden. Durch Aufrechterhaltung der Vorspannung kann so auch über einen großen Temperaturbereich eine zuverlässige Kontaktierung bereitgestellt werden. Das zweite Bauteil kann durch die Unterkonstruktion oder ein weiteres Klemmteil gebildet sein.

Das vorgeschlagene Verfahren in Kombination mit der erfindungsgemäßen Federkopfschraubenanordnung erlaubt die zuverlässige Herstellung einer erfindungsgemäßen Bauteilverbindung mit einem sehr guten Vorspannkrafterhalt unter Temperatureinfluss.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:

Fig. 1	eine Schnittansicht einer erfindungsgemäßen Federkopfschraubenanordnung, und

Fig. 2	eine erfindungsgemäße Bauteilverbindung aus einer Federkopfschraubenanordnung, einem Klemmteil und einer Unterkonstruktion

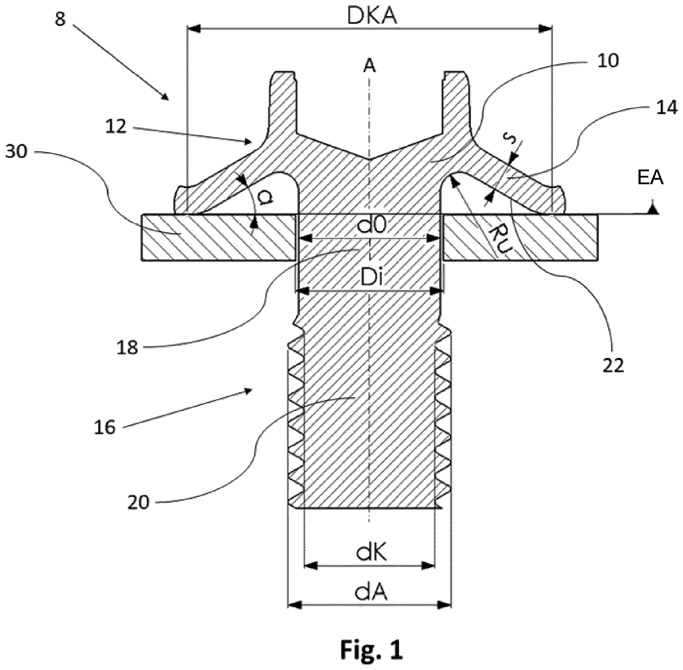

Fig. 1 zeigt eine erfindungsgemäße Federkopfschraubenanordnung 8 umfassend eine Federkopfschraube 10 mit einem Kopf 12, der eine konisch verlaufende Schürze 14 in der Art einer Tellerfeder aufweist. Die Schürze 14 bildet eine Auflageebene $E_A$, die dem freien Ende der Federkopfschraube 10 zugewandt ist und sich im Wesentlichen orthogonal zur Schraubenachse A erstreckt.

Die konische Schürze 14 bildet in der Auflageebene $E_A$ einen Innendurchmesser, der als Auflageinnendurchmesser $D_{KA}$ bezeichnet ist.

Die Federkopfschraube 10 umfasst zudem einen Schaft 16, der an seinem dem Kopf 12 zugewandten Ende einen gewindefreien Teil 18 mit einem als Bolzendurchmesser $d_0$ bezeichneten Durchmesser aufweist. In Richtung des freien Endes der Schraube 10, das dem Kopf 12 gegenüberliegt, weist der Schaft 16 einen gewindetragenden Bereich 20 mit einem Außendurchmesser $d_A$ auf, der größer als der Bolzendurchmesser $d_0$ ist, und mit einem Kerndurchmesser $d_K$, der in der Regel kleiner als der Bolzendurchmesser $d_0$ ist.

Ferner umfasst die erfindungsgemäße Federkopfschraubenanordnung 8 eine Unterlegscheibe 30, die auf den Schaft 16 der Federkopfschraube 10 unverlierbar aufgewalzt ist. Die Unterlegscheibe 30 weist damit einen Innendurchmesser $D_I$ auf, der geringer ist als der Außendurchmesser $d_A$ des gewindetragenden Teils 20 des Schafts 16, aber größer als der Bolzendurchmesser da.

Gemäß der erfindungsgemäßen Federkopfschraube 10 geht der gewindefreie Teil 18 des Schafts 16 über einen Radius Ru in die Schürze 14 über, wobei zwischen der Auflageebene $E_A$ und dem Radius Ru noch ein gewindefreier Teil 18 des Schafts 16 liegt, der den Bolzendurchmesser $d_0$ aufweist.

Dies hat den Vorteil, dass bei der Federkopfschraube 10 während des Anziehvorgangs, bei dem sich der Schwerpunkt des Kopfes aufgrund der einfedernden Schürze 14 in Richtung der Unterlegscheibe 30 bewegt, ein Anliegen der Unterlegscheibe 30 mit dem sich verbreiternden Schaftübergang im Übergang vom Schaft 16 zur Schürze 14 über einen in Axialrichtung längeren zylindrischen Bereich vermieden wird. Auf diese Weise kann der Bereich, in dem die Federkopfschraube 10 mit der Unterlegscheibe 30 im elastischen Bereich genutzt werden kann, vergrößert werden.

In der vorliegenden Gestaltung liegt der Aufstandswinkel α, der den Winkel zwischen der Innenfläche 22 der Schürze 14 und der Auflageebene $E_A$ abbildet, bei 30°.

Der Radius Ru für die Unterkopfkontur ergibt sich zu $(D_{KA}-d_0) / 2 * \tan (\alpha =30°) * \text{Faktor}$, wobei der Faktor in dem vorliegenden Beispiel bei etwa 0,3 liegt.

Der Radius Ru geht sowohl in den Schaft 16 als auch in die Schürze 14 tangential über.

Dies sorgt dafür, dass eine axiale Verschiebung des Schwerpunktes des Kopfes 12 in Einschraubrichtung nicht vorzeitig zu einer Anlage des Übergangs von Schaft zu Kopf an der Unterlegscheibe 30 führt, was einen prozessbegrenzenden Momentanstieg nach sich ziehen würde.

Auf diese Weise kann dem Kriechen, insbesondere des Klemmteils, unter Vorspannung verbessert Rechnung getragen und der Vorspannkrafterhalt verbessert werden.

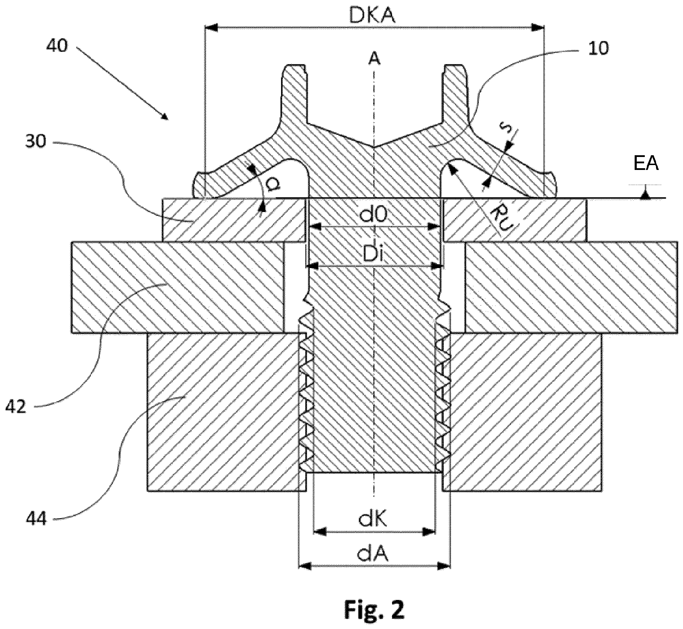

Fig. 2 zeigt eine Bauteilverbindung 40, umfassend eine erfindungsgemäße Federkopfschraube 10 mit einer Unterlegscheibe 30, sowie eine Unterkonstruktion 44, in welche die Federkopfschraube 10 eingeschraubt ist, wobei zwischen der Unterlegscheibe 30 und der Unterkonstruktion 44 ein Klemmteil 42 eingeklemmt ist, wobei die Schürze 14 der Federkopfschraube 10 eine Vorspannkraft auf das Klemmteil 42 ausübt. Im vorliegenden Beispiel zeigt das Klemmteil 42 unter Temperatureinfluss ein stärkeres Kriechverhalten als die Unterkonstruktion 44. Es können auch mehrere Klemmteile zwischen Unterlegscheibe 30 und Unterkonstruktion 44 geklemmt sein.

In der Auslegung der Bauteilverbindung 40 sind die Komponenten so aufeinander abgestimmt, dass unter den vorgesehenen Einsatzbedingungen, nämlich Vorspannung, Temperaturverlauf und Zeit, die Federkopfschraube ein Kriechen des Klemmteils so weit ausgleicht, dass immer noch ein Federweg erhalten bleibt. Dadurch wird eine Mindestvorspannkraft von der Federkopfschraube auf das Klemmteil 42 ausgeübt.

Beispielsweise bildet das Klemmteil 42 einen elektrischen Kontakt mit der Unterkonstruktion 44.

Beispielsweise bestehen die Federkopfschraube 10 und die Unterlegscheibe 30 aus Stahl und das Klemmteil 42 aus Kupfer.

Die Unterlegscheibe 30 ist unverlierbar an der Federkopfschraube 10 gehalten, so dass sie auf einfache Weise montierbar ist.


**Patentansprüche**

1. Federkopfschraubenanordnung (8) umfassend eine Federkopfschraube (10) mit einem Kopf (12) mit einer konisch verlaufenden Schürze (14), die sich in Richtung des freien Endes eines an den Kopf (12) anschließenden gewindetragenden Schafts aufweitet, **dadurch gekennzeichnet, dass** die Federkopfschraubenanordnung (8) eine Unterlegscheibe (30) aufweist, die zwischen der Schürze (14) und dem gewindetragenden Teil (20) des Schafts (16) in einem gewindefreien Teil (18) des Schafts (16) mit einem Bolzendurchmesser (do) liegt, wobei die Innenfläche (22) der Schürze (14) in einem Radius (Ru) in den Schaft (16) übergeht, wobei die Innenfläche (22) einen Aufstandswinkel ($\alpha$) mit einer Auflageebene ($E_A$) bildet, wobei die Auflageebene ($E_A$) durch das dem freien Ende der Schraube zugewandte Ende der Schürze (14) bestimmt ist und orthogonal zur Schraubenachse liegt, wobei der Schaft (16) zwischen der Auflageebene ($E_A$) und dem Radius (Ru) im Übergang zur Schürze (14) einen zylindrischen Bereich mit dem Bolzendurchmesser (do) aufweist.

2. Federkopfschraubenanordnung nach Anspruch 1, **dadurch gekennzeichnet, dass** die Unterlegscheibe (30) ein Loch mit einem Innendurchmesser ($D_I$) aufweist, der geringer ist als der Außendurchmesser ($d_A$) des angrenzenden gewindetragenden Teils (20) des Schafts (16),

3. Federkopfschraubenanordnung nach Anspruch 1 oder 2, **dadurch gekennzeichnet, dass** der Radius (Ru) tangential in den Schaft (16) übergeht.

4. Federkopfschraubenanordnung nach Anspruch 3, **dadurch gekennzeichnet, dass** der Radius (Ru) tangential in die Innenfläche (22) der Schürze (14) übergeht.

5. Federkopfschraubenanordnung nach einem der vorangehenden Ansprüche, **dadurch gekennzeichnet, dass** die Schürze (14) in der Auflageebene ($E_A$) einen Auflageinnendurchmesser ($D_A$) definiert, wobei der Radius (Ru) kleiner ist als ($D_{KA}$-$d_0$)/2 * tan ($\alpha$) * Faktor, wobei der Faktor kleiner als 0,5 ist.

6. Federkopfschraubenanordnung nach einem der vorangehenden Ansprüche, **dadurch gekennzeichnet, dass** der Faktor zwischen 0,2 und 0,4 liegt.

7. Federkopfschraubenanordnung nach einem der vorangehenden Ansprüche, **dadurch gekennzeichnet, dass** der Innendurchmesser ($D_i$) der Unterlegscheibe (30) kleiner als das 1,07-fache des Bolzendurchmessers (do) ist.

8. Federkopfschraubenanordnung nach einem der vorangehenden Ansprüche, **dadurch gekennzeichnet, dass** der Winkel ($\alpha$) zwischen 20° und 40°, insbesondere zwischen 28° und 32° beträgt.

9. Federkopfschraubenanordnung nach einem der vorangehenden Ansprüche, **dadurch gekennzeichnet, dass** die Stärke (s) der Schürze (14) etwa 5 % bis 15 % des Auflageinnendurchmessers ($D_A$) des Kopfes beträgt.

10. Federkopfschraubenanordnung nach einem der vorangehenden Ansprüche, **dadurch gekennzeichnet, dass** die Unterlegscheibe (30) verliersicher an der Federkopfschraube (10) angeordnet ist.

11. Verfahren zur automatischen Verschraubung einer Federkopfschraubenanordnung (8) nach einem der vorangehenden Ansprüche, **dadurch gekennzeichnet, dass** die Federkopfschraube (10) durch ein Klemmteil (42) gesteckt wird und mit einer unter dem Klemmteil (42) liegenden Unterkonstruktion (44) verschraubt wird, wobei die Federkopfschraube (10) so lange angezogen wird, bis ein vordefiniertes Drehmoment erreicht ist, wobei ab der Detektion des Drehmoments die Federkopfschraube (10) über einen vordefinierten Drehwinkel weiter eingeschraubt wird.

12. Verfahren nach Anspruch 11, **dadurch gekennzeichnet, dass** der vordefinierte Drehwinkel wenigstens 180° ist.

13. Bauteilverbindung umfassend eine Federkopfschraubenanordnung (8) nach einem der Ansprüche 1 bis 10, eine Unterkonstruktion (44), in die die Federkopfschraube (8) eingeschraubt ist, wobei zwischen der Federkopfanordnung (8) und der Unterkonstruktion (44) ein Klemmteil (42) geklemmt ist, welches unter einem vordefinierten Temperatureinfluss und vordefinierter Anpresskraft seine Stärke im Bereich der Auflagefläche der Unterlegscheibe (30) um eine Kriechstrecke reduziert, wobei die Federkopfschraubenanordnung (8) so ausgebildet ist, dass nach dem Anziehen der Schraube die Summe aus der Längung des Schafts (16) und des Federwegs der Schürze (12) die Länge der Kriechstrecke übersteigt.

**14.** Bauteilverbindung nach Anspruch 13, hergestellt durch das Verfahren nach Anspruch 10 oder 11.

**15.** Bauteilverbindung nach Anspruch 13 oder 14, **dadurch gekennzeichnet, dass** die Federkopfschraubenanordnung aus Stahl besteht und das Klemmteil aus Kupfer.

**Claims**

**1.** Spring head screw assembly (8) comprising a spring head screw (10) with a head (12) having a conical skirt (14) that widens in the direction of the free end of a threaded shaft adjoining the head (12), **characterized in that** the spring head screw assembly (8) has a washer (30) that is arranged between the skirt (14) and the threaded part (20) of the shaft (16) in a non-threaded part (18) of the shaft (16) with a bolt diameter ($d_0$), wherein the inner surface (22) of the skirt (14) transitions into the shaft (16) within a radius ($R_U$), wherein the inner surface (22) forms a contact angle (a) with a bearing plane ($E_A$), which bearing plane ($E_A$) is determined by the end of the skirt (14) facing the free end of the screw and is orthogonal to the screw axis, wherein the shaft (16) has a cylindrical region with the bolt diameter ($d_0$) between the bearing plane ($E_A$) and the radius ($R_U$) at the transition to the skirt (14).

**2.** Spring head screw assembly according to claim 1, **characterized in that** the washer (30) has a hole with an inside diameter ($D_i$) which is smaller than the outside diameter ($D_A$) of the adjoining threaded part (20) of the shaft (16).

**3.** Spring head screw assembly according to one of claims 1 or 2 above, **characterized in that** the radius ($R_U$) transitions tangentially into the shaft (16).

**4.** Spring head screw assembly according to claim 3, **characterized in that** the radius ($R_U$) transitions tangentially into the inner surface (22) of the skirt (14).

**5.** Spring head screw assembly according to any one of the preceding claims, **characterized in that** the skirt (14) defines an bearing inner diameter ($D_A$) in the bearing plane ($E_A$), wherein the radius ($R_U$) is smaller than $(D_{KA} - d_0)/2 *$ tan (a) * factor, which factor is less than 0.5.

**6.** Spring head screw assembly according to any one of the preceding claims, **characterized in that** the factor is between 0.2 and 0.4.

**7.** Spring head screw assembly according to any one of the preceding claims, **characterized in that** the inside diameter ($D_i$) of the washer (30) is smaller than 1.07 times the bolt diameter ($d_0$).

**8.** Spring head screw assembly according to any one of the preceding claims, **characterized in that** the angle ($\alpha$) is between 20° and 40°, in particular between 28° and 32°.

**9.** Spring head screw assembly according to any one of the preceding claims, **characterized in that** the thickness (s) of the skirt (14) is approximately between 5% and 15% of the bearing inner diameter ($D_A$) of the head.

**10.** Spring head screw assembly according to any one of the preceding claims, **characterized in that** the washer (30) is held captive on the spring head screw (10).

**11.** Method for automatic screwing of a spring head screw assembly (8) according to any one of the preceding claims, **characterized in that** the spring head screw (10) is inserted through a clamping part (42) and screwed to a substructure (44) located under the clamping part (42), wherein the spring head screw (10) is tightened until a predefined torque is reached, whereupon, from the point at which the torque is detected, the spring head screw (10) is screwed in further over a predefined angle of rotation.

**12.** Method according to claim 11, **characterized in that** the predefined angle of rotation is at least 180°.

**13.** Component connection comprising a spring head screw assembly (8) according to any one of claims 1 to 10 above, a substructure (44) into which the spring head screw (8) is screwed, wherein a clamping part (42) is clamped in place between the spring head assembly (8) and the substructure (44), which clamping part (42), under the influence of a predefined temperature and predefined contact pressure, will undergo a reduction in thickness in the region of the bearing surface of the washer (30) by a creepage distance, with the spring head screw assembly (8) being designed such that, after the screw has been tightened, the sum of the elongation of the shaft (16) and the spring travel of the skirt (12) exceeds the length of the creepage distance.

**14.** Component connection according to claim 13, produced by the method of any one of claims 10 or 11 above.

**15.** Component connection according to any one of claims 13 or 14, **characterized in that** the spring head screw assembly is made of steel, and the clamping part is made of copper.

**Revendications**

1. Ensemble vis à tête de ressort (8) comprenant une vis à tête de ressort (10) avec une tête (12) avec une jupe (14) s'étendant de manière conique, qui s'élargit en direction de l'extrémité libre d'une tige filetée se raccordant à la tête (12), **caractérisé en ce que** l'ensemble vis à tête de ressort (8) présente une rondelle (30), qui se situe entre la jupe (14) et la partie filetée (20) de la tige (16) dans une partie non filetée (18) de la tige (16) avec un diamètre de boulon ($d_0$), dans lequel la surface intérieure (22) de la jupe (14) se prolonge en la tige (16) dans un rayon ($R_U$), dans lequel la surface intérieure (22) forme un angle de contact ($\alpha$) avec un plan d'appui ($E_A$), dans lequel le plan d'appui ($E_A$) est déterminé par l'extrémité de la jupe (14) tournée vers l'extrémité libre de la vis et se situe perpendiculairement à l'axe de vis, dans lequel la tige (16) présente entre le plan d'appui ($E_A$) et le rayon ($R_U$) dans la transition vers la jupe (14) une zone cylindrique avec le diamètre de boulon (do).

2. Ensemble vis à tête de ressort selon la revendication 1, **caractérisé en ce que** la rondelle (30) présente un trou avec un diamètre intérieur ($D_I$), qui est inférieur au diamètre extérieur ($d_A$) de la partie filetée (20) adjacente de la tige (16).

3. Ensemble vis à tête de ressort selon la revendication 1 ou 2, **caractérisé en ce que** le rayon ($R_U$) se prolonge de manière tangentielle en la tige (16).

4. Ensemble vis à tête de ressort selon la revendication 3, **caractérisé en ce que** le rayon ($R_U$) se prolonge de manière tangentielle dans la surface intérieure (22) de la jupe (14).

5. Ensemble vis à tête de ressort selon l'une quelconque des revendications précédentes, **caractérisé en ce que** la jupe (14) définit dans le plan d'appui ($E_A$) un diamètre intérieur d'appui ($D_A$), dans lequel le rayon ($R_U$) est inférieur à ($D_{KA}-d_0$)/2 * tan ($\alpha$) * facteur, dans lequel le facteur est inférieur à 0,5.

6. Ensemble vis à tête de ressort selon l'une quelconque des revendications précédentes, **caractérisé en ce que** le facteur est compris entre 0,2 et 0,4.

7. Ensemble vis à tête de ressort selon l'une quelconque des revendications précédentes, **caractérisé en ce que** le diamètre intérieur ($D_i$) de la rondelle (30) est inférieur à 1,07 fois le diamètre de boulon ($d_0$).

8. Ensemble vis à tête de ressort selon l'une quelconque des revendications précédentes, **caractérisé en ce que** l'angle ($\alpha$) est compris entre 20° et 40°, en particulier entre 28° et 32°.

9. Ensemble vis à tête de ressort selon l'une quelconque des revendications précédentes, **caractérisé en ce que** l'épaisseur (s) de la jupe (14) atteint sensiblement 5 % à 15 % du diamètre intérieur d'appui ($D_A$) de la tête.

10. Ensemble vis à tête de ressort selon l'une quelconque des revendications précédentes, **caractérisé en ce que** la rondelle (30) est disposée de manière imperdable sur la vis à tête de ressort (10).

11. Procédé pour le vissage automatique d'un ensemble vis à tête de ressort (8) selon l'une quelconque des revendications précédentes, **caractérisé en ce que** la vis à tête de ressort (10) est fixée par une partie de blocage (42) et est vissée avec une sous-structure (44) située sous la partie de blocage (42), dans lequel la vis à tête de ressort (10) est serrée jusqu'à ce qu'un couple prédéfini soit atteint, dans lequel à partir de la détection du couple la vis à tête de ressort (10) continue d'être vissée sur un angle de rotation prédéfini.

12. Procédé selon la revendication 11, **caractérisé en ce que** l'angle de rotation prédéfini est au moins de 180°.

13. Assemblage de pièces comprenant un ensemble vis à tête de ressort (8) selon l'une quelconque des revendications 1 à 10, une sous-structure (44), dans laquelle la vis à tête de ressort (8) est vissée, dans lequel une partie de blocage (42) est bloquée entre l'ensemble de tête à ressort (8) et la sous-structure (44), laquelle sous une influence de température prédéfinie et force de pression prédéfinie réduit son épaisseur d'une ligne de fuite dans la zone de la surface d'appui de la rondelle (30), dans lequel l'ensemble vis à tête de ressort (8) est réalisé de sorte qu'après le serrage de la vis la somme de l'allongement de la tige (16) et de la course de ressort de la jupe (12) dépasse la longueur de la ligne de fuite.

14. Assemblage de pièces selon la revendication 13, obtenu par le procédé selon la revendication 10 ou 11.

15. Assemblage de pièces selon la revendication 13 ou 14, **caractérisé en ce que** l'ensemble vis à tête de ressort est constitué d'acier et la partie de blocage de cuivre.

**Fig. 1**

EP 4 305 320 B1

Fig. 2

9

**IN DER BESCHREIBUNG AUFGEFÜHRTE DOKUMENTE**

**In der Beschreibung aufgeführte Patentdokumente**

- DE 102016100446 A1